# EUROPÄISCHE PATENTANMELDUNG

(11) **EP 0 614 238 A1**
(43) Veröffentlichungstag der Anmeldung: **07.09.1994**
(21) Anmeldenummer: 94100398.0
(22) Anmeldetag: 13.01.1994
(51) Int. Cl.: H01M 10/34

(54) **Gasdicht verschlossener Nickel/Hydrid-Akkumulator**

(30) Priorität: 24.02.1993 DE 4305560
(71) Anmelder: VARTA Batterie Aktiengesellschaft, D-30419 Hannover (DE)
(72) Erfinder: Köhler, Uwe, Dr., D-65779 Kelkheim (DE); Hoge, Detlev, Dr., D-38518 Gifhorn (DE)
(74) Vertreter: Kaiser, Dieter Ralf, Dipl.-Ing.

(57) **Zusammenfassung**

Ein gasdichter Nickel/Hydrid-Akkumulator mit hoher Sauerstoffverzehrrate und demzufolge niedrigem Innendruck weist eine Elektrodenanordnung in Stapelform auf, bei welcher zweigeteilte negative Elektroden (2) mit einem groben Stützgerüst (3) als Abstandshalter zwischen den Teilelektroden (2') dem Sauerstoff einen Innenraum (4) mit großen Wandflächen für die Reduktion darbieten und gasundurchlässige mikroporöse Separatoren (5) den von den positiven Elektroden (1) ausgehenden Sauerstoffstrom an den Vorderseiten der negativen Teilelektroden (2') vorbeilenken. Wegen der vollständigen Elektrolyterfüllung ihrer Mikroporen dank deren Kapillaraktivität erlauben diese Separatoren auch den Bau von Nickel/Hydrid-Akkumulatoren mit Zellhöhen, die sonst bei alkalischen Akkumulatoren mit Vliesscheidern nicht erreichbar sind.

## Beschreibung

Die Erfindung betrifft einen Nickel/Hydrid-Akkumulator mit im wesentlichen Nickel-hydroxid enthaltenden positiven Elektroden und mit eine Wasserstoffspeicherlegierung enthaltenden negativen Elektroden, welche im Wechsel der Polaritäten eine Stapelanordnung bilden, und mit einem gasdichten Gehäuse.

Ebenso wie beim gasdichten Nickel/Cadmium-Akkumulator setzt auch der gasdichte Betrieb einer Nickel/Hydridsbatterie die fortwährende Beseitigung des beim Überladen an der positiven Elektrode entstehenden Sauerstoffs voraus. Dabei hängt dessen Menge sehr stark von den Lade-, Entladebedingungen, der Temperatur, der Elektrolytzusammensetzung und von der Zellenbalance ab. In diesem Gleichgewichtszustand wird der gesamte Ladestrom bei einem Sauerstoffdruck, der sich unter bestimmten Betriebsbedingungen und für ein bestimmtes Auslegungsverhältnis der Elektroden einstellt, an der negativen Elektrode für die Sauerstoffreduktion verbraucht.

Indem die negative Elektrode gegenüber der positiven Elektrode überdimensioniert ist, behält sie nach Volladung der positiven Elektrode noch eine negative Ladereserve. Desgleichen liegt bei vollständiger Entladung der Zelle noch eine Teilladung der negativen Elektrode als negative Entladereserve vor. Dadurch wird sichergestellt, daß bei Überladung bzw. Überentladung allein an der positiven Nickelelektrode Sauerstoff bzw. Wasserstoff entwickelt werden. Beide Gase müssen an der Oberfläche der negativen Elektrode und bei deren Potential abgebaut werden, z.B. elektrochemisch gemäß ½ O₂ + H₂O + 2e⁻ → 2OH⁻ oder durch chemische Vereinigung des Sauerstoffs mit dem gespeicherten Wasserstoff, Hₛₚ, gemäß 4 Hₛₚ + O₂ → 2H₂O.

Dabei ist wichtig, daß die Entfernung insbesondere des Sauerstoffs möglichst rasch erfolgt, damit kein unzulässig hoher Gasdruck sowie kein Knallgas im Innern der Zelle entsteht.

Als Abhilfe für diesen Fall ist bei einem gasdichten alkalischen Akkumulator gemäß DE-PS 1671972 eine Vergrößerung der negativen Elektrodenfläche durch Zweiteilung der Elektrode vorgesehen, derart, daß die nebeneinanderliegenden Teilelektroden, in welche zusätzlich Gasdurchtrittsöffnungen eingebracht sind, mit einem gerüstähnlichen Abstandshalter zwischen sich einen Gasverzehrraum umschließen, an dessen Wänden das von den positiven Nachbarelektroden entwickelte Sauerstoffgas schnell umgesetzt wird.

Bei einer aus der DE-PS 2838857 bekannten Metalloxid/Lanthannickelhydrid-Speicherzelle hingegen wird die Reduktion des Sauerstoffs von einer Hilfselektrode übernommen, welche innerhalb eines Elektrodenstapels jeweils mit einer negativen Elektrode in elektronischem Kontakt steht, räumlich aber von dieser getrennt ist. Ferner weist die Elektrodenanordnung in dieser bekannten Speicherzelle zwei verschiedene Sorten von Separatoren auf, nämlich grobporöse hydrophobe, welche sich jeweils zwischen positiven Elektroden und Hilfselektroden befinden und den Zutritt von Sauerstoff an die letzteren begünstigen, sowie hydrophile Separatoren mit geringer Gaspermeabilität jeweils zwischen positiven und negativen Elektroden, welche die letzteren vor einem direkten Anströmen von Sauerstoff schützen.

Der Erfindung liegt die Aufgabe zugrunde, einen gasdichten Nickel/Hydrid-Akkumulator so zu konstruieren, daß ohne Beeinträchtigung der Funktion der Elektroden die Gasverzehrprozesse an der negativen Elektrode mit hohen Umsetzungsraten ablaufen und der Zellinnendruck selbst bei langen Überladephasen auf einem niedrigen Niveau bleibt.

Die Aufgabe wird erfindungsgemäß durch einen Akkumulator gelöst, wie er im Patentanspruch 1 definiert ist.

Danach hat sich gezeigt, daß eine Stapelanordnung der Elektroden die genannten Forderungen erfüllt, bei der die negativen Elektroden in zwei nebeneinanderliegende Teilelektroden aufgeteilt sind, welche durch ein grobes, mechanisch stabiles Gerüst auf einem definierten Abstand gehalten werden, und bei welcher alle negativen Elektroden gegen die benachbarten positiven Elektroden mittels gasundurchlässiger Separatoren isoliert sind.

Zur Verdeutlichung wird der Erfindungsgegenstand anhand zweier Figuren näher erläutert.

Figur 1 zeigt die Elektroden- und Separatorenanordnung in einem erfindungsgemäßen Nickel/Hydrid-Akkumulator schematisch.

Figur 2 zeigt das Spannungsverhalten und den Innendruck des Nickel/Hydrid-Akkumulators.

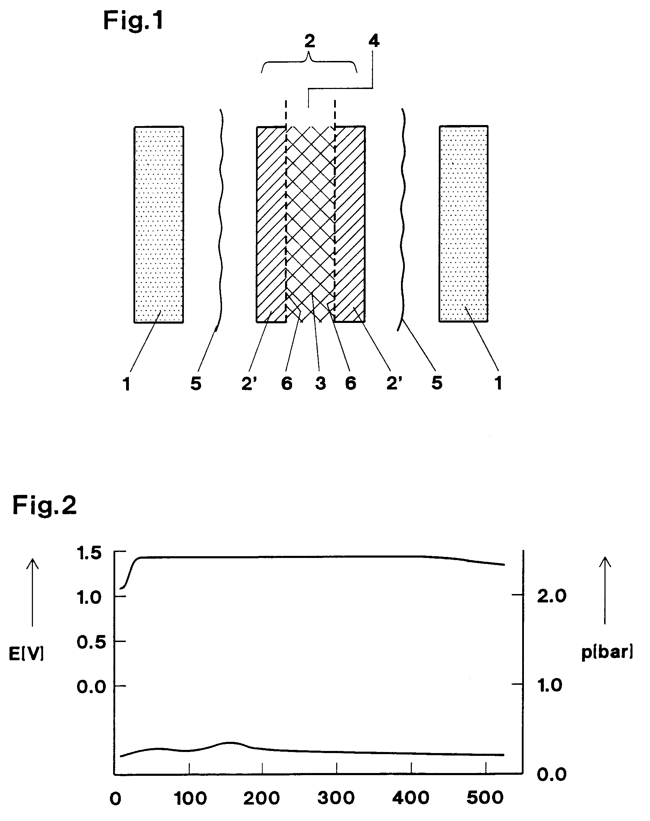

Wie aus Figur 1 ersichtlich, wechseln positive Elektroden 1 und negative Elektroden 2 einander ab und werden durch Separatoren 5, die gasundurchlässig sind, getrennt. Jede negative Elektrode 2 ist in zwei Teilelektroden 2' aufgespalten und verfügt dadurch über zwei rückwärtige Elektrodenflächen, die für den Sauerstoff leicht zugänglich sind, indem ein grobes Stützgerüst oder eine offenporige Struktur 3 aus einem Metallschaum oder Kunststoff als Abstandshalter einen Zwischenraum 4 zwischen den Teilelektroden von definierter Breite offenhält. Das Abstandshaltermaterial ist elektrochemisch inaktiv.

Die Separatoren 5 sind vorzugsweise mikroporöse Membranen und dank der hohen Kapillaraktivität ihres Porensystems vollständig mit Elektrolyt gefüllt. Dies wiederum hat eine weitgehende Gasundurchlässigkeit zur Folge.

Der Sauerstoffstrom wird so von den Vorderseiten der negativen Elektroden abgehalten und über die Teilelektroden hinweg in den Zwischenraum 4 abgelenkt, wo sich ihm an den Rückwänden der Teilelktroden eine große Reaktionsfläche darbietet.

In einer bevorzugten Ausführungsform der Erfindung liegen sich die Trägergerüste 6 der Teilelektroden, z.B. Nickelnetze, einschließlich Stromableiter beiderseits des Zwischenraumes 4 einander gegenüber, wie in Figur 1 wiedergeben, und bilden so mit der Gerüststruktur des Zwischenraumes, die ebenfalls elektrochemisch inaktiv ist, ein integrales Ganzes.

Es liegt auch im Rahmen der Erfindung, eine negative Elektrode auf der Basis eines Schaummetall-Trägers von größerer Dicke zu verwenden, in den beidseitig - durch Schlämmen oder Pastieren - aktives Material in Form einer Wasserstoffspeicherlegierung nur bis zu einer bestimmten Tiefe eingebracht ist, so daß der Gasverzehrraum 4 durch eine von aktivem Material nicht ausgefüllte Porenzone im Innern des Schaummetall-Trägers gebildet ist.

Im übrigen lassen sich die negativen Teilelektroden auch nach einem in der DE-OS 4017919 beschriebenen Walzverfahren herstellen. Man verwendet hierbei eine Trockenpulvermischung, bestehend aus einem zur Wasserstoffspeicherung befähigten Metall oder einer Metallegierung, einem Zusatz des gleichen Metalls in Hydridform als Lade-/Entladereserve und aus einem Kunststoffbindemittel. Diese Mischung wird einem feinmaschigen Metallnetz oder einem Streckmetall als Träger aufgewalzt.

Durch geschickte Auswahl und Dosierung des Bindemittels läßt sich das Elektrodenmaterial so hydrophobieren, daß sich Dreiphasengrenzen ausbilden, an denen sowohl die elektrochemisch gewünschten Umsetzungen aus der flüssigen Phase als auch die Reaktionen aus der Gasphase optimal ablaufen.

Überhaupt ist ein hydrophobes Verhalten der Hydridelektroden ganz entscheidend für ihre Befähigung nicht nur zur Sauerstoffabsorption, sondern auch zur Aufnahme von Wasserstoffgas, das im Falle einer Polumkehr an den positiven Elektroden gebildet wird und nun seinerseits von den Teilelektroden absorbiert werden muß, damit dort seine Rekombination erfolgen kann.
Der erfindungsgemäße Einsatz von mikroporösen, gasundurchlässigen Separatoren hat sich noch aus einem anderen Grunde als ein großer Vorteil für den neuen Nickel/Hydrid-Akkumulator erwiesen. Dank deren Saugvermögen füllen sich die Mikroporen vollständig mit Elektrolyt und halten diesen auch bei einem hochformatigen Zuschnitt des Separators in dessen oberen Bereich zuverlässig zurück.

Wegen der hohen Kapillarkräfte in solchen Separatoren ist es möglich, Nickel/Hydrid-Akkumulatoren mit erheblich größeren Zellhöhen zu bauen als solche bisher bei wiederaufladbaren alkalischen Systemen mit den üblichen grobporigen Vliesscheidern realisiert werden konnten. Während deren Zellhöhe 10 bis 15cm beträgt, sollte mit mikroporösen Separatoren die doppelte Höhe erreichbar sein.

Aus Figur 2 sind die Verläufe der Spannung (E [Volt], Kurve 1) und des Innendrucks (p [bar], Kurve 2) einer Versuchszelle gemäß der Erfindung während einer mehr als 500min. dauernden Überladung mit einem 10stündigen Ladestrom ersichtlich.

Der Erfolg der erfindungsgemäßen Maßnahmen, nämlich die konstruktive Flächenvergrößerung der negativen Elektrode durch Teilung und die günstige Hinlenkung des Sauerstoffstromes zum Ort seines Verzehrs mittels gasundurchlässiger Separatoren, wird hier durch den gleichmäßigen horizontalen Verlauf der Spannungskurve, insbesondere aber der Druckkurve auf einem niedrigen Niveau von weniger als 1 bar (absolut) bestätigt.

## Patentansprüche

1. Nickel/Hydrid-Akkumulator mit im wesentlichen Nickelhydroxid enthaltenden positiven Elektroden und mit eine Wasserstoffspeicherlegierung enthaltenden negativen Elektroden, welche im Wechsel der Polaritäten eine Stapelanordnung bilden, und mit einem gasdichten Gehäuse, dadurch gekennzeichnet, daß die negativen Elektroden zweigeteilt sind, wobei eine zwischenliegende Schicht von grobporiger Struktur den Abstand der beiden nebeneinanderliegenden Teilelektroden definiert, und daß jede negative Elektrode gegen die benachbarten positiven Elektroden mittels gasundurchlässiger Separatoren isoliert ist.

2. Nickel/Hydrid-Akkumulator nach Anspruch 1, dadurch gekennzeichnet, daß die negativen Elektroden hydrophobiert sind.

3. Nickel/Hydrid-Akkumulator nach Anspruch 1 oder 2, dadurch gekennzeichnet, daß an den Teilelektroden jeweils vorhandene Trägergerüste oder Stromableiter der grobporigen Zwischenschicht zugekehrt sind.

4. Nickel/Hydrid-Akkumulator nach einem der Ansprüche 1 bis 3, dadurch gekennzeichnet, daß die grobporige Zwischenschicht aus einem Kunststoff besteht.

5. Nickel/Hydrid-Akkumulator nach einem der Ansprüche 1 bis 3, dadurch gekennzeichnet, daß die grobporige Zwischenschicht von einem Metallschaum gebildet ist.
